# EUROPÄISCHE PATENTSCHRIFT

(11) **EP 0 864 608 B1**
(45) Veröffentlichungstag und Bekanntmachung des Hinweises auf die Patenterteilung: **08.01.2003**
(21) Anmeldenummer: 98103321.0
(22) Anmeldetag: 26.02.1998
(51) Int. Cl.: C08L 21/00, C08K 5/54, C08G 65/32

(54) **Polysulfidische Polyethersilane enthaltende Kautschukmischungen**
Rubber compositions containing polysulfide polyethersilanes
Compositions de caoutchouc contenant des polyethersilanes polysulfidics

(30) Priorität: 11.03.1997 DE 19709873
(43) Veröffentlichungstag der Anmeldung: 16.09.1998
(73) Patentinhaber: BAYER AG, 51368 Leverkusen (DE)
(72) Erfinder: Scholl, Thomas, Dr., 51469 Bergisch Gladbach (DE); Weidenhaupt, Hermann-Josef, Dr., 50259 Pulheim (DE); Königshofen, Heinrich, Dr., 51465 Bergisch Gladbach (DE); Eisele, Ulrich, Prof. Dr., 51375 Leverkusen (DE)

(56) Entgegenhaltungen:
- DE-A- 4 406 947

## Beschreibung

Die vorliegende Erfindung betrifft neue polysulfidische Polyethersilane enthaltende Kautschukmischungen sowie die Verwendung dieser Kautschukmischungen zur Herstellung von Kautschukvulkanisaten. Die erfindungsgemäßen Kautschukmischungen eignen sich zur Herstellung von Formkörpern, insbesondere zur Herstellung von Reifen, die einen geringen Rollwiderstand aufweisen, verbunden mit einem guten Naßrutschverhalten, einer hohen Abriebsfestigkeit sowie einer hohen dynamischen und thermischen Belastbarkeit.

Zur Herstellung von Reifen mit verringertem Rollwiderstand sind eine Reihe von Lösungsvorschlägen ausgearbeitet worden. In den deutschen Offenlegungsschriften 2 141 159, 2 141 160 und 2 255 577 sowie US-PS 4.709.065 sind bestimmte Organosilane als Verstärkungsadditive, insbesondere für kieselsäurehaltige Kautschukvulkanisate beschrieben. Auch in der EP 447 066 wird der Einsatz solcher Organosilane für die Herstellung von Kieselsäure-gefüllten Reifenlaufflächen beschrieben. Durch die Kombination von Stoffen auf Kieselsäurebasis und Organosilanen gelang es, den Rollwiderstand der Reifen zu verringern, ohne, wie sonst üblich, die Abriebfestigkeit und die Naßrutschfestigkeit der Reifen zu verschlechtern. Zur Herstellung der genannten Verbindungsklassen sind jedoch große Mengen eines teuren und aufwendig herzustellenden Silan-Rohstoffs erforderlich.

In DE-A 4406947 und DE-A 19 54 9027 werden oligomere Schwefel/Siliciumhaltige Verstärkungsadditive beschrieben, die mit einem geringeren Gehalt an teurem Silan-Rohstoff ähnlich gute Ergebnisse liefern wie früher beschriebene Verbindungen mit höherem Silananteil. Nachteilig ist jedoch, daß die Löslichkeit der Verbindungen ab einem bestimmten Molekulargewicht aufgrund des hohen polysulfidischen Anteils abnimmt und der Zusatz weiterer unpolarer Lösungsmittel zur Durchführung der Reaktion erforderlich wird. Hierdurch geht zumindest ein Teil der gewonnenen Rohstoffvorteile durch höheren verfahrenstechnischen Aufwand bei der Herstellung verloren.

Es wurde jetzt gefunden, daß bestimmte polysulfidische Polyethersilane trotz des weit höheren Molgewichtes in demselben Lösungsmittel wie die niedermolekularen Silane hergestellt werden können. Darüber hinaus sind die erfindungsgemäßen polysulfidischen Polyethersilane trotz ihres weit geringeren Si-Gehalts als Verstärkungsadditive in kieselsäuregefüllten Kautschukvulkanisaten ähnlich wirksam wie die niedermolekuaren Silane und besitzen weitere Vorteile durch eine verbesserte Vulkanisationskinetik bei der Herstellung von Vulkanisaten und Vorteile in der dynamischen Dämpfung der Vulkanisate.

Gegenstand der vorliegenden Erfindung sind daher Kautschukmischungen enthaltend mindestens einen Kautschuk, einen Füllstoff, gegebenenfalls weitere Kautschukhilfsmittel sowie mindestens ein polysulfidisches Polyethersilan der Formel

R¹R²R³Si-X¹-(-Sₓ-Polyether-)ₘ-(-Sₓ-X²-SiR¹R²R³)ₙ (I),

worin
- R¹, R² und R³: gleich oder verschieden sind und C₁-C₁₈-Alkyl, C₁-C₁₈-Alkoxy, C₆-C₁₂-Phenyl oder -Phenoxy, C₇-C₁₈-Alkylaryl oder Alkylaryloxi bedeuten, mit der Maßgabe, daß mindestens einer der Reste R¹ bis R³ eine Alkoxy-, Phenoxy- oder Alkylaryloxigruppe ist,
- X¹ und X²: gleich oder verschieden sind und für zweiwertige, lineare oder verzweigte oder cyclische, gegebenenfalls ungesättigte C₁-C₁₂-Alkylreste stehen,
- Polyether: für einen bi-, tri- oder tetrafunktionellen Polyethylenoxidpolyether-, Polypropylenoxidpolyether-, Polybutylenoxidpolyether-, oder einen entsprechenden Mischpolyether-Rest mit einem mittleren Molekulargewicht von 300 bis 5 000 steht,
- m: für eine ganze Zahl von 1 bis 20 steht,
- n: für eine Zahl von 1 bis 4 steht, und
- x: eine Zahl von 1 bis 8 bedeutet,
wobei das polysulfidische Polyethersilan in Mengen von 0,1 bis 15 Gew.-%, bezogen auf die Menge des jeweils eingesetzten Kautschuks, eingesetzt wird.

Bevorzugt enthalten die erfindungsgemäßen Kautschukmischungen 0,1 bis 10 Gew.-% polysulfidisches Polyethersilan, ganz besonders bevorzugt 1 bis 7,5 Gew.-%.

Die erfindungsgemäßen Kautschukmischungen enthalten bevorzugt solche polysulfidischen Polyethersilane der obigen Formel, in der R¹, R² und R³ unabhängig voneinander Methyl, Ethyl, Propyl oder Phenyl bedeuten, mit der Maßgabe, daß mindestens einer der Reste R¹ - R³ für eine Methoxy-, Ethoxy-, Propoxy-, Butoxy- oder Phenoxygruppe steht, und X¹ und X² Methylen-, Propylen-, Butylen-, Pentylen- oder Hexylenreste bedeuten sowie Y für einen Polyethylenoxid-, Polypropylenoxidrest oder einen Polyethylenoxid/Polypropylenoxid-Mischpolyetherrest mit Molekulargewichten zwischen 300 und 1 500 steht, der erhalten wurde durch Anlagerung von mindestens 6 mol Ethylenoxid und/oder Propylenoxid an ein aliphatisches oder aromatisches Diol oder Amin und worin n = 1 und m ganze Zahlen von 1 bis 20 bedeutet.

Ganz besonders bevorzugt sind Verstärkungsadditive der folgenden nachstehenden Formeln: 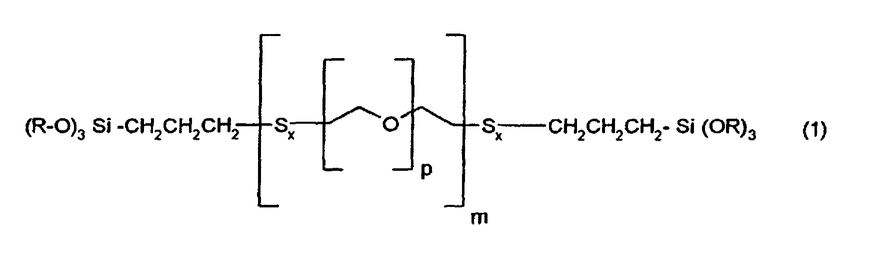 mit R = CH₃, C₂H₅, x = 1 - 8, p = 5 - 30, m = 1 - 20 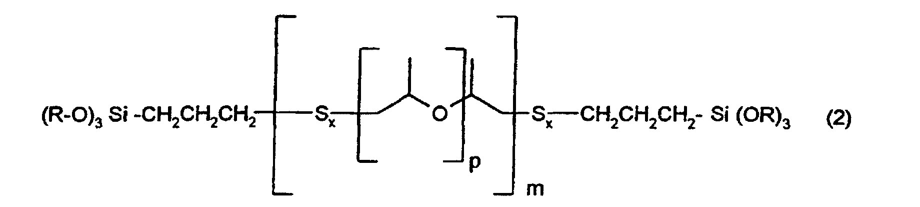 mit R = CH₃, C₂H₅, x = 1 - 8, p = 5 - 30, m = 1 - 20 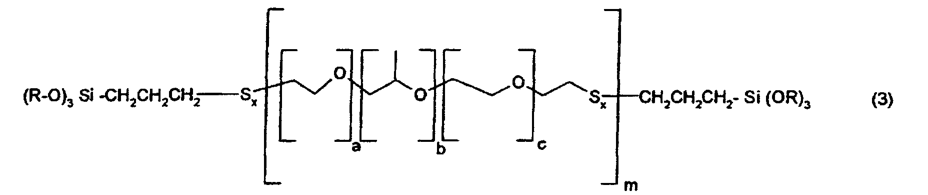 mit R = CH₃, C₂H₅, C₃H₇, x = 1 - 8, a = 3 - 20, b = 1 - 10, c = 3-20, m = 1 - 20, 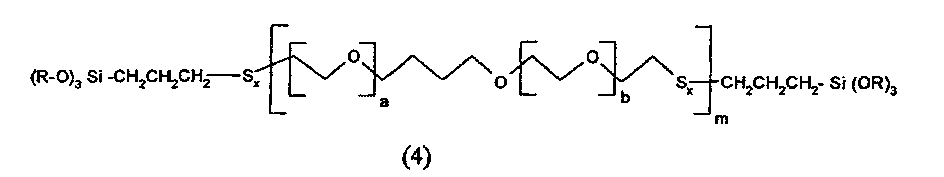 mit R = CH₃, C₂H₅, C₃H₇, x = 1 - 8, a = 3 - 20, b = 2 - 20, m = 1 - 20, 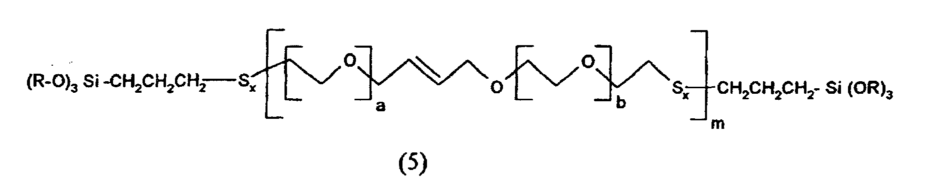 mit R = CH₃, C₂H₅, C₃H₇, x = 1 - 8, a = 3 - 20, b = 2 - 20, m = 1 - 20, 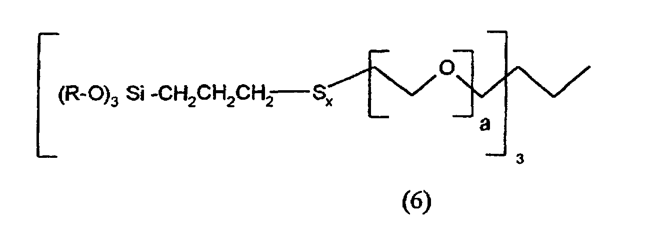 mit R= CH₃, C₂H₅, C₃H₇, x = 1 - 8, a = 2 - 20 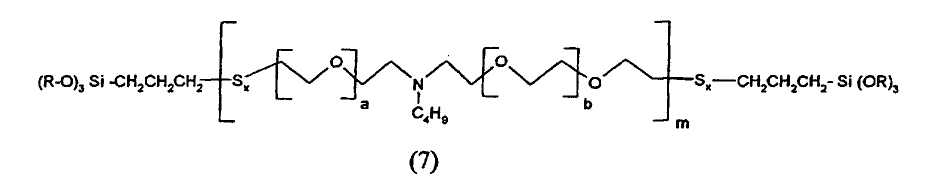 mit R = CH₃, C₂H₅, C₃H₇, x = 1 - 8, a = 3 - 20, b = 1 - 10, m = 1 - 20.

Insbesondere bevorzugt sind polysulfidische Polyethersilane der folgenden Formel: 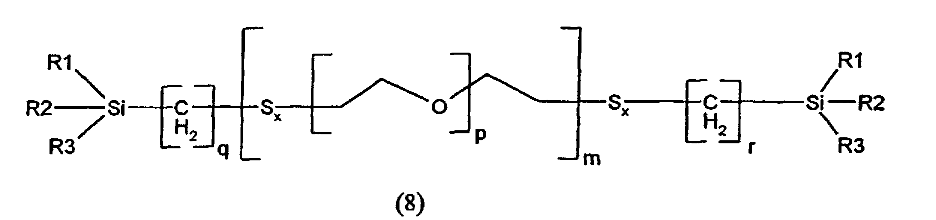 mit R1, R2, R3 = Methyl, Phenyl, Methoxi, Ethoxi, Propoxi, Butoxi mit der Maßgabe, daß mindestens einer der Reste ein Methoxi-, Ethoxi-, Propoxi-, Butoxirest ist. q, r = 1 - 3, x = 1 - 8, p = 6 - 30, m = 1 - 20

Die erfindungsgemäßen polysulfidischen Polyethersilane können sowohl einzeln als auch im Gemisch untereinander eingesetzt werden. Dabei können entweder die einzelnen Verbindungen mit einem definierten Molekulargewicht eingesetzt werden oder Oligomerengemische, die eine bestimmte Molekulargewichtsverteilung aufweisen.

Aus verfahrenstechnischen Gründen ist es einfacher, ein Oligomerengemisch der genannten polysulfidischen Polyethersilane herzustellen und sie in dieser Form einzusetzen. Werden die Verstärkungsadditive als Oligomerengemisch eingesetzt so besitzen diese ein mittleres Molekulargewicht von etwa 800 - 10 000 bestimmt nach Gelpermeationschromatographie.

Die Herstellung der erfindungsgemäßen neuen polysulfidischen Polyethersilane kann auf verschiedene Weise erfolgen:
A) Durch Umsetzung von Mercaptogruppen-haltigen Silanen und Di- und/oder Polymercaptanen mit Schwefeldichlorid oder Schwefeldichlorid unter Abspaltung von HCI. Die Reaktion kann in an sich bekannter Art und Weise bei Temperaturen von -30 bis + 80°C, gegebenenfalls in Gegenwart von Lösungsmitteln, wie Alkoholen oder aromatischen Kohlenwasserstoffen, durchgeführt werden:

   R¹R²R³Si-X-SH + HS-Polyether-SH + SₓCl₂ R¹R²R³Si-X-ₓ₊₂-(-Polyether-Sₓ₋₂)ₘ-X-SiR¹R²R³+HCl

   Zur Durchführung der Reaktion verweisen wir auf Houben-Weyl, Methoden der organischen Chemie, Band 9, Seite 88 ff. (1955) und Band E 11 (1985), Thieme Verlag, Stuttgart.
B) In besonders vorteilhafter Weise gelingt die Herstellung der erfindungsgemäßen polysulfidischen Polyethersilane, wenn man Halogenalkylsilylether und Polyhalogenide mit Metallpolysulfiden in Gegenwart von alkoholischen Lösungsmitteln bei Temperaturen von ca. -20 bis +90°C umsetzt:

   R¹R²R³Si-X-Hal + Hal-Polyether-Hal + MeSₓ R¹R²R³Si-X-ₓ-(-Polyether-Sₓ)ₘ-X-SiR¹R²R³ + MeHal

Als Metallpolysulfide werden bevorzugt solche eingesetzt, in denen Me für Lithium, Natrium oder Kalium steht und x eine Zahl von 2 bis 8 bedeutet. Als alkoholische Lösungsmittel werden bevorzugt Methanol, Ethanol, Propanol, Butanol, Amylalkohol, Hexylalkahol, Octanol, Ethylenglykol und Propylenglykol, Butandiol und/oder Hexandiol sowie deren Isomeren eingesetzt.

Die erfindungsgemäßen polysulfidischen Polyethersilane können sowohl in reiner Form als auch aufgezogen auf einen inerten organischen oder anorganischen Träger, den Kautschukmischungen zugesetzt werden. Als Trägermaterialialien eignen sich insbesondere Kieselsäuren, natürliche oder synthetische Silikate, Aluminiumoxyd sowie Ruße.

Als Füllstoffe kommen für die erfindungsgemäßen Kautschukvulkanisate aktive als auch inaktive Füllstoffe in Frage, wie z.B.:
- hochdisperse Kieselsäuren, hergestellt z.B. durch Fällung von Lösungen von Silikaten oder Flammenhydrolyse von Siliciumhalogeniden mit spezifischen Oberflächen von 5-1000, vorzugsweise 20-400 m²/g (BET-Oberfläche) und mit Primärteilchengrößen von 100-400 nm. Die Kieselsäuren können gegebenenfalls auch als Mischoxide mit anderen Metalloxiden, wie Al-, Mg-, Ca-, Ba-, Zn-, Zr-, Ti-oxiden, vorliegen,
- synthetische Silikate, wie Aluminiumsilikate oder Erdalkalisilikate, wie Magnesiumsilikat oder Calciumsilikat, mit BET-Oberflächen von 20-400 m²/g und Primärteilchendurchmessern von 10-400 nm,
- natürliche Silikate, wie Kaolin, oder andere natürlich vorkommende Kieselsäuren,
- Glasfasern und Glasfaserprodukte (Matten, Stränge) oder Mikroglaskugeln.
- Aluminium- oder Magnesiumhydroxide
- Ruße. Die hierbei zu verwendenden Ruße sind nach dem Flammruß-, Furnace- oder Gasrußverfahren hergestellt und besitzen BET-Oberflächen von 20 - 200 m² / g, wie z.B. SAF-, ISAF-, HAF-, FEF- oder GPF-Ruße.

Bevorzugt werden hochdisperse Kieselsäuren mit BET-Oberflächen von 20-400 m²/g eingesetzt.

Die obengenannten Füllstoffe werden in Mengen von 0 bis 150 Gew.-%, bevorzugt 10 bis 100 Gew.-%, bezogen auf die Menge des jeweils eingesetzten Kautschuks, eingesetzt.

Die genannten Füllstoffe können alleine oder im Gemisch untereinander eingesetzt werden. In einer besonderen Ausführungsform enthalten die Kautschukmischungen als Füllstoffe ein Gemisch aus hellen Füllstoffen, wie hochdispersen Kieselsäuren, und Rußen, wobei das Mischungsverhältnis von hellen Füllstoffen zu Rußen bei 0,05 bis 20, bevorzugt 0,1 bis 10 liegt. Die polysulfidischen Polyethersilane (I) können alleine als Vernetzungsmittel dienen. Als weitere Vernetzungsmittel für die erfindungsgemäßen Kautschukmischungen können beispielsweise Schwefel und Peroxide eingesetzt werden, denen noch die bekannten Vulkanisationsbeschleuniger, wie Mercaptobenzthiazole, Mercaptosulfenamide, Thiurame und Thiocarbonate zugesetzt werden können. Sowohl die Vulkanisationsbeschleuniger als auch die Vernetzungsmittel können einzeln oder im Gemisch untereinander eingesetzt werden. Besonders bevorzugt wird Schwefel als Vernetzungsmittel eingesetzt. Die Vernetzungsmittel und die Vulkanisationsbeschleuniger werden jeweils in Mengen von 0,1 bis 10 Gew.-%, bevorzugt 0,1 bis 5 Gew.-%, bezogen auf den jeweils eingesetzten Kautschuk, eingesetzt.

Den erfindungsgemäßen Kautschukmischungen können selbstverständlich noch weitere Kautschukhilfsprodukte zugesetzt werden, wie Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Reaktionsverzögerer, Metalloxide, wie Zinkoxid und Magnesiumoxid sowie Aktivatoren, wie Triethanolamin, Polyethylenglykol, Hexantriol, die dem Gummifachmann geläufig sind.

Die genannten Kautschukhilfsmittel werden in üblichen Mengen (0,1 bis 50 Gew.-%, bezogen auf den jeweils eingesetzten Kautschuk), eingesetzt. Die günstigste Menge an Hilfsmittel läßt sich leicht durch Vorversuche ermitteln und richtet sich im übrigen nach dem jeweiligen Verwendungszweck der Kautschukvulkanisate.

Für die Herstellung der erfindungsgemäßen Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u.a. Polybutadien, Butadien/Acrylsäure-C₁-C₄-Alkylester-Copolymere, Polychloropren, Polyisopren, Styrol/Butadien-Copolymerisate mit Styrolgehalten von 1 - 60, vorzugsweise 20 - 50 Gew.-%, Isobutylen/Isopren-Copolymerisate, Butadien/Acrylnitril-Copolymere mit Acrylnitrilgehalten von 5 - 60, vorzugsweise 10 - 50 Gew.-%, teilhydrierter oder vollständig hydrierter Butadien/Acrylnitril-Copolymere sowie Ethylen/Propylen/Dien-Copolymerisate. Selbstverständlich können die Kautschuke auch im Gemisch untereinander eingesetzt werden. Für die Herstellung von Kfz-Reifen sind insbesondere anionisch polymerisierte Lösungs-Styrol/Butadien-Copolymerisate mit einer Glastemperatur oberhalb von -50°C, die gegebenenfalls mit Silylethern oder anderen funktionellen Gruppen, modifiziert sein können, Polybutadienkautschuke mit hohem cis-1,4-Gehalt (> 90 %), der mit Katalysatoren auf Basis Ni, Co, Ti oder Nd hergestellt wird, Polybutadienkautschuke mit einem Vinylgehalt von 0 bis 75 %, sowie deren Mischungen von Interesse (siehe beispielsweise EP-A 447 066).

Die Herstellung der Kautschukmischungen erfolgt in üblicher Weise, in bekannten Mischaggregaten, wie Walzen, Innenmischern und Mischextrudern bei Massetemperaturen von 100°C bis 200°C bei Scherraten von 1 bis 1 000 s⁻¹.

Die Zugabe der erfindungsgemäßen Verstärkungsadditive sowie die Zugabe der Füllstoffe erfolgt bevorzugt im ersten Teil des Mischprozesses bei Massetemperaturen von 100 bis 200°C und den erwähnten Scherraten. Sie kann jedoch auch später bei tieferen Temperaturen 40 - 100°C z.B. zusammen mit Schwefel und Vulkanisationsbeschleunigern erfolgen.

Die erfindungsgemäßen Kautschukmischungen können in üblicher Weise vulkanisiert werden (siehe z. B. G. Alliger, I.J. Sjothun, Vulkanization of Elastomeres, Reinhold Publishing Corporation, New York, 1964). Die Vulkanisation wird dabei bei Temperaturen von etwa 100 bis 200°C, bevorzugt bei 130 - 180°C, gegebenenfalls bei Drücken von 10 bis 200 bar, durchgeführt.

Die erfindungsgemäßen Kautschukvulkanisate eignen sich insbesondere zur Herstellung von Formkörpern, z.B. für die Herstellung von Kabelmänteln, Schläuchen, Treibriemen, Förderbändern, Walzen Schuhsohlen, Dichtungsringe und Dämpfungselementen, bevorzugt für die Herstellung von Reifen.

### Beispiele

### Beispiel 1

### Cl-terminierter bifunktioneller Polyethylenoxid-Polyether mit MG ca. 400

400 g eines Polyethylenglykols mit einem mittleren Molgewicht von 400 und 0,5 g Pyridin wurden bei 50 - 60°C innerhalb von zwei Stunden mit 238 g Thionylchlorid versetzt. Dann erhitzte man unter Durchleiten von Stickstoff 18 Stunden auf 65 - 70°C und entgaste weitere 3 Stunden im Vakuum (20 mbar) bei 70°C. Man erhielt 418 g eines farblosen Öls mit einer Viskosität von 40 mPa.s.

| Elementaranalyse: | | | |
|---|---|---|---|
| | C | H | Cl |
| berechnet: | 47,2 % | 7,9 % | 17,4 % |
| gefunden: | 47,2 % | 7,8 % | 15,5 % |

### Beispiel 2

### Cl-terminierter bifunktioneller Polyethylenoxid-Polyether mit MG ca. 600

Es wurde wie in Beispiel 1 verfahren, wobei 600 g eines Polyethylenoxid-Polyethers mit einem mittleren Molgewicht von 600 in Gegenwart von 0,5 g Pyridin mit 238 g Thionylchlorid umgesetzt wurden. Man erhielt 624 g eines braunen Öls mit der Viskosität 90 mPa sec.

### Beispiel 3

### Cl-terminierter bifunktioneller Polyethylenoxid-Polyether mit MG ca. 900

Es wurde wie in Beispiel 1 verfahren, wobei 450 g eines Polyethylenoxid-Polyethers mit einem mittleren Molgewicht von 900 in Gegenwart von 0,5 g Pyridin mit 119 g Thionylchlorid umgesetzt wurden. Man erhielt 454 g eines fast farblosen Öls, das nach einigen Tagen bei Raumtemperatur kristallisierte. Fp. 35-40°C.

| Elementaranalyse: | | | |
|---|---|---|---|
| | C | H | Cl |
| berechnet: | 51,1 % | 8,5 % | 7,0 % |
| gefunden: | 51,3 % | 8,5 % | 7,4 % |

### Beispiel 4

### Cl-terminierter bifunktioneller Polyethylenoxid-Polyether mit MG ca. 1550

Es wurde wie in Beispiel 1 verfahren, wobei 750 g eines Polyethylenoxid-Polyethers mit einem mittleren Molgewicht von 1500 in Gegenwart von 0,5 g Pyridin mit 119 g Thionylchlorid umgesetzt wurden. Man erhielt 755 g eines fast farblosen Öls, das beim Abkühlen auf Raumtemperatur kristallisierte.

| Elementaranalyse: | | | |
|---|---|---|---|
| | C | H | Cl |
| berechnet: | 52,8 % | 8,6 % | 4,5 % |
| gefunden: | 52,8 % | 8,6 % | 4,4 % |

### Beispiel 5

### (C₂H₅O)₃Si- C₃H₆ - S₄ - Polyether - S₄ - C₃H₆-Si(OC₂H₅)₃ mit einem Polyethylenoxidpolyether mit mittleren Molgewicht von ca. 600

78 g (1 mol) wasserfreies Natriumsulfid und 96 g (3 mol) Schwefel wurden in 500 ml trockenem Ethanol 30 Minuten auf 70°C erhitzt. Dann tropfte man 240,8 g (1 mol) 3-Chlorpropyltriethoxisilan und anschließend 318,5 g (0,5 mol) eines Cl-terminierten Polyethylenoxidpolyethers gemäß Beispiel 2 hinzu und rührte 5 Stunden bei 70°C.
Nach dem Abkühlen wurde filtriert und das abgeschiedene NaCl abfiltriert. Nach dem Eindampfen erhielt man 604 g eines braunen Öls mit der Viskosität 230 mPa sec.

| Elementaranalyse: | | | | |
|---|---|---|---|---|
| | C | H | S | Si |
| berechnet: | 42,6 % | 7,6 % | 20,2 % | 4,4 % |
| gefunden: | 42,7 % | 7,4 % | 20,3 % | 4,8 % |

### Beispiel 6

### (C₂H₅O)₃Si- C₃H₆ - S₄ - Polyether - S₄ - C₃H₆ -Si(OC₂H₅)₃ mit einem Polyethylenoxidpolyether mit mittleren Molgewicht von ca. 400

Es wurde wie in Beispiel 5 verfahren, wobei man 78 g (1 mol) wasserfreies Natriumsulfid und 96 g (3 mol) Schwefel in 500 ml trockenem Ethanol 30 Minuten auf 70°C erhitzte. Dann tropfte man 240,8 g (1 mol) 3-Chlorpropyltriethoxisilan und anschließend 203,5 g (0,5 mol) eines Cl-terminierten Polyethylenoxidpolyethers gemäß Beispiel 1 hinzu und rührte 5 Stunden bei 70°C. Nach dem Abkühlen wurde filtriert und das abgeschiedene NaCl abfiltriert. Nach dem Eindampfen erhielt man 506 g eines braunen Öls mit der Viskosität 120 mPa sec.

| Elementaranalyse: | | | | |
|---|---|---|---|---|
| | C | H | S | Si |
| berechnet: | 40,7 % | 7,4 % | 25,6 % | 5,6 % |
| gefunden: | 42,0 % | 7,4 % | 24,0 % | 5,2 % |

### Beispiel 7

### (C₂H₅O)₃Si- C₃H₆ - S₄ - Polyether - S₄ - C₃H₆ -Si(OC₂H₅)3 mit einem Polyethylenoxidpolyether mit mittleren Molgewicht von ca. 900

Es wurde wie in Beispiel 5 verfahren, wobei man 62,4 g (0,8 mol) wasserfreies Natriumsulfid und 76,8 g (2,4 mol) Schwefel in 500 ml trockenem Ethanol 30 Minuten auf 70°C erhitzte. Dann tropfte man 192,4 g (0,8 mol) 3-Chlorpropyltriethoxisilan und anschließend 381,2 g (0,4 mol) eines Cl-terminierten Polyethylenoxidpolyethers gemäß Beispiel 3 hinzu und rührte 5 Stunden bei 70°C. Nach dem Abkühlen wurde filtriert und das abgeschiedene NaCl abfiltriert. Nach dem Eindampfen erhielt man 644 g eines braunen Öls mit der Viskosität 820 mPa sec, das nach längerem Stehen bei Raumtemperatur auskristallisierte. Fp. 35°C.

| Elementaranalyse: | | | | |
|---|---|---|---|---|
| | C | H | S | Si |
| berechnet: | 44,9 % | 7,9 % | 16,2 % | 3,6 % |
| gefunden: | 44,9 % | 7,9 % | 15,9 % | 3,3 % |

### Beispiel 8

### (C₂H₅O)₃Si- C₃H₆ - S₄ - Polyether - S₄ - C₃H₆ -Si(OC₂H₅)₃ mit einem Polyethylenoxidpolyether mit mittleren Molgewicht von ca. 1500

Es wurde wie in Beispiel 5 verfahren, wobei man 39 g (0,5 mol) wasserfreies Natriumsulfid und 48 g (1,5 mol) Schwefel in 500 ml trockenem Ethanol 30 Minuten auf 70°C erhitzte. Dann tropfte man 120,4 g (0,5 mol) 3-Chlorpropyltriethoxisilan und anschließend 375 g g (0,25 mol) eines Cl-terminierten Polyethylenoxidpolyethers gemäß Beispiel 4 hinzu und rührte 5 Stunden bei 70°C. Nach dem Abkühlen wurde filtriert und das abgeschiedene NaCl abfiltriert. Nach dem Eindampfen erhielt man 535 g eines braunen Öls, das bei Raumtemperatur rasch auskristallisierte. Fp. 50 - 55°C.

| Elementaranalyse: | | | | |
|---|---|---|---|---|
| | C | H | S | Si |
| berechnet: | 47,7 % | 8,2 % | 11,8 % | 2,6 % |
| gefunden: | 47,6 % | 8,2 % | 11,8 % | 2,6 % |

### Beispiel 9

### (C₂H₅O)₃Si- C₃H₆ - (S₄ - Polyether)-₃ S₄ - C₃H₆ -Si(OC₂H₅)₃ mit einem Polyethylenoxidpolyether mit mittleren Molgewicht von ca. 400

Es wurde wie in Beispiel 5 verfahren wobei man 78 g (1 mol) wasserfreies Natriumsulfid und 96 g (3 mol) Schwefel in 500 ml trockenem Ethanol 30 Minuten auf 70°C erhitzte. Dann tropfte man 120,4 g (0,5 mol) 3-Chlorpropyltriethoxisilan und anschließend 305,3 g (0,75 mol) eines Cl-terminierten Polyethylenoxidpolyethers gemäß Beispiel 1 hinzu und rührte 5 Stunden bei 70°C. Nach dem Abkühlen wurde filtriert und das abgeschiedene NaCl abfiltriert. Nach dem Eindampfen erhielt man 496 g eines braunen Öls mit der Viskosität 720 mPa sec.

### Beispiel 10: Löslichkeitsverhalten in Ethanol

je 30 Gew.Teile einer polysulfidischen Silylverbindung wurden mit 70 Gew.-Teilen Ethanol 5 Minuten auf 70°C erhitzt wobei die Löslichkeit in der Hitze beurteilt wurde:

| Silylverbindung | vollst. Löslichkeit | Si-Gehalt |
|---|---|---|
| erfindungsgemäße Beispiele: | | |
| Verb. gem. Beispiel 5 | ja | 4,7 % |
| Verb. gem. Beispiel 6 | ja | 5,6 % |
| Verb. gem. Beispiel 7 | ja | 3,7 % |
| Verb. gem. Beispiel 8 | ja | 2,7 % |
| Verb. gem. Beispiel 9 | ja | 2,9 % |
| | | |

| Vergleichsbeispiele: | | |
|---|---|---|
| Bsp. 2 der DE-OS 2.141.160 | ja | 10,4 % |
| Bsp. 1 der DE-A 195 49 027 | nein | 5,8 % |
| Bsp. 2 der DE-A 195 49 027 | nein | 4,6 % |
| Bsp. 3 der DE-A 195 49 027 | nein | 3,8 % |
| Bsp. 5 der DE-A 195 49 027 | nein | 4,8 % |

Die Versuchergebnisse zeigen, daß die erfindungsgemäßen polysulfidischen Polyethersilane trotz geringerem Gehalt an teurem Silan-Rohstoff eine bessere Löslichkeit in dem Reaktionsmedium (Ethanol) besitzen, sodaß ein verfahrenstechnisch aufwendiges Lösungsmittelgemisch zur Herstellung vermieden werden kann.

### Beispiel 11: Vergleich der Vulkanisationskinetik:

Die nachfolgenden Kautschukmischungen wurden in einem 1,5 l Kneter bei 140°C innerhalb von 5 Minuten hergestellt. Zum Schluß wurden Schwefel und Beschleuniger auf einer Walze bei ca. 50°C zugemischt. Die Vulkanisationskinetik wurde an den fertigen Mischungen mit Hilfe eines Monsanto Rheometers MDR 2000 bei 160°C untersucht:

| | Vergleichsbeispiele: | | | erfind. Beispiele: | | | |
|---|---|---|---|---|---|---|---|
| | A | B | C | D | E | F | G |
| L-SBR Buna VSL 4020-0 (Bayer) | 75 | 75 | 75 | 75 | 75 | 75 | 75 |
| BR Buna CB 11 (Bayer) | 25 | 25 | 25 | 25 | 25 | 25 | 25 |
| Kieselsäure Vulkasil S (Bayer) | 80 | 80 | 80 | 80 | 80 | 80 | 80 |
| Ruß Corax N 339 (Degussa) | 6,5 | 6,5 | 6,5 | 6,5 | 6,5 | 6,5 | 6,5 |
| arom. Öl Renopal 450 (Fuchs) | 32,5 | 32,5 | 32,5 | 32,5 | 32,5 | 32,5 | 32,5 |
| ZnO | 2,5 | 2,5 | 2,5 | 2,5 | 2,5 | 2,5 | 2,5 |
| Stearinsäure | 1 | 1 | 1 | 1 | 1 | 1 | 1 |
| Antiozonant Vulkanox 4020 (Bayer) | 1,5 | 1,5 | 1,5 | 1,5 | 1,5 | 1,5 | 1,5 |
| Wachs Antilux 654 (Rheinchemie) | 1,5 | 1,5 | 1,5 | 1,5 | 1,5 | 1,5 | 1,5 |
| polysulfid. Silan gemäß Bsp. 1 der DE 19 549 027 | 6,5 | 0 | 0 | 0 | 0 | 0 | 0 |
| polysulfid. Silan gemäß Bsp. 2 der DE 19 549 027 | 0 | 6,5 | 0 | 0 | 0 | 0 | 0 |
| polysulfid. Silan gemäß Bsp. 3 der DE 19 549 027 | 0 | 0 | 6,5 | 0 | 0 | 0 | 0 |
| erfindungsgemäße Verbindung Bsp. 6 | 0 | 0 | 0 | 6,5 | 0 | 0 | 0 |
| erfindungsgemäße Verbindung Bsp. 5 | 0 | 0 | 0 | 0 | 6,5 | 0 | 0 |
| erfindungsgemäße Verbindung Bsp. 7 | 0 | 0 | 0 | 0 | 0 | 6,5 | 0 |
| erfindungsgemãße Verbindung Bsp. 9 | 0 | 0 | 0 | 0 | 0 | 0 | 6,5 |
| CBS Vulkacit CZ (Bayer) | 1,5 | 1,5 | 1,5 | 1,5 | 1,5 | 1,5 | 1,5 |
| DPG Vulkacit D (Bayer) | 2 | 2 | 2 | 2 | 2 | 2 | 2 |
| Schwefel | 1,5 | 1,5 | 1,5 | 1,5 | 1,5 | 1,5 | 1,5 |
| | | | | | | | |
| Anvulkanisationszeit bei 160°C (TS 06) in Minuten: | 2,4 | 2,2 | 2,1 | 2,8 | 3 | 3 | 2,6 |
| Ausvulkanisationszeit bei 160°C (t 90) in Minuten | 14,2 | 13,5 | 13,4 | 13,5 | 12,4 | 11,5 | 12 |

Es wird deutlich, daß die Kautschukmischungen mit den erfindungsgemäßen Verbindungen ein günstigeres Vulkanisationsverhalten besitzen, d.h. eine längere Zeit der Verarbeitbarkeit und einen kürzere Ausheizzeit.

### Beispiel 12:

Die nachfolgenden Kautschukmischungen wurden in einem 1,5 l Kneter bei 140°C innerhalb von 5 Minuten hergestellt. Zum Schluß wurden Schwefel und Beschleuniger auf einer Walze bei ca. 50°C zugemischt.

| | Vergleichsbeisp. | erfind. Beispiele: | |
|---|---|---|---|
| | A | B | C |
| L-SBR Buna VSL 5025-1 (Bayer) | 75 | 75 | 75 |
| BR Buna CB 24 (Bayer) | 25 | 25 | 25 |
| Kieselsäure Vulkasil S (Bayer) | 80 | 80 | 80 |
| Ruß Corax N 339 (Degussa) | 6,5 | 6,5 | 6,5 |
| arom. Öl Renopal 450 (Fuchs) | 8 | 8 | 8 |
| ZnO | 2,5 | 2,5 | 2,5 |
| Stearinsäure | 1 | 1 | 1 |
| Antiozonant Vulkanox 4020 (Bayer) | 1,5 | 1,5 | 1,5 |
| Wachs Antilux 654 (Rheinchemie) | 1,5 | 1,5 | 1,5 |
| Bis-(triethoxisilylpropyl)tetrasulfid gemäß DE 2.255.577 | 6,5 | 0 | 0 |
| Verbindung gemäß Bsp. 6 | 0 | 6,5 | 0 |
| Verbindung gemäß Bsp. 7 | 0 | 0 | 6,5 |
| CBS Vulkacit CZ (Bayer) | 1,5 | 1,5 | 1,5 |
| DPG Vulkacit D (Bayer) | 2 | 2 | 2 |
| Schwefel | 1,5 | 1,5 | 1,5 |

Die Kautschukmischungen wurden anschließend 45 Minuten bei 160°C vulkanisiert. Es ergaben sich folgende Vulkanisateigenschaften:

| | | | |
|---|---|---|---|
| Spannungswert bei 100 % Dehnung (MPa) | 3,4 | 3,4 | 3,6 |
| Spannungswert bei 300 % Dehnung (MPa) | 13,7 | 14,5 | 13,2 |
| Zugfestigkeit (MPa) | 19 | 18,2 | 17,9 |
| Weiterreißfestigkeit (MPa) | 35,1 | 43,1 | 40,2 |
| Härte (Shore A) bei 23°C | 73 | 73 | 74 |
| Rückprallelastizität bei 23°C (%) | 25 | 25 | 23 |
| Rückprallelastizität bei 70°C (%) | 46 | 48 | 46 |

Anhand der Vulkanisateigenschaften erkennt man, daß die erfindungsgemäßen polysulfidischen Polyethersilane trotz gegenüber dem Stand der Technik erheblich reduziertem Gehalt an teurem Silanrohstoff zu gleichen mechanischen Eigenschaften führen und darüberhinaus noch Vorteile in der verbesserten Relation von Naßrutschverhalten/Rollwiderstand (größere Differenz zwischen den Rückprallelastizitäten bei 23 und 70°C) bewirken.

## Patentansprüche

1. Kautschukmischungen, enthaltend mindestens einen Kautschuk, einen Füllstoff, gegebenenfalls weitere Kautschukhilfsmittel sowie mindestens ein polysulfidisches Polyethersilan der Formel
R¹R²R³Si-X¹-(-Sₓ-Polyether-)ₘ-(-Sₓ-X²-SiR¹R²R³)ₙ (I),
worin
R¹, R² und R³ gleich oder verschieden sind und C₁-C₁₈-Alkyl, C₁-C₁₈-Alkoxy, C₆-C₁₂-Phenyl oder -Phenoxy, C₇-C₁₈-Alkylaryl oder Alkylaryloxi bedeuten, mit der Maßgabe, daß mindestens einer der Reste R¹ bis R³ eine Alkoxy-, Phenoxy- oder Alkylaryloxigruppe ist,
X¹ und X² gleich oder verschieden sind und für zweiwertige, lineare oder verzweigte oder cyclische, gegebenenfalls ungesättigte C₁-C₁₂-Alkylreste stehen,
Polyether für einen bi-, tri- oder tetrafunktionellen Polyethylenoxidpolyether-, Polypropylenoxidpolyether-, Polybutylenoxidpolyether-, oder einen entsprechenden Mischpolyether-Rest mit einem mittleren Molekulargewicht von 300 bis 5 000 steht,
m für eine ganze Zahl von 1 bis 20 steht,
n für eine Zahl von 1 bis 4 steht, und
x eine Zahl von 1 bis 8 bedeutet,
wobei das polysulfidische Polyethersilan (I) in Mengen von 0,1 bis 15 Gew.-%, bezogen auf die Menge des jeweils eingesetzten Kautschuks, eingesetzt wird.

2. Verwendung der Kautschukmischungen gemäß Anspruch 1 zur Herstellung von Kautschukvulkanisaten.

## Claims

1. Rubber mixtures, containing at least one rubber, a filler, optionally additional rubber auxiliary materials and at least one polysulfide polyether silane corresponding to the formula
R¹R²R³Si-X¹-(-Sₓ- polyether-)ₘ-(-Sₓ-X²-SiR¹R²R³)ₙ (I),
wherein
R¹, R² and R³ are identical or different and denote C₁-C₁₈-alkyl, C₁-C₁₈-alkoxy, C₆-C₁₂-phenyl or -phenoxy, C₇-C₁₈-alkylaryl or alkylaryloxy, with the proviso that at least one of the groups R¹ to R³ is an alkoxy, phenoxy or alkylaryloxy group,
X¹ and X² are identical or different and represent divalent, linear or branched or cyclic, optionally unsaturated C₁-C₁₂-alkyl groups,
polyether represents a bi-, tri- or tetrafunctional polyethylene oxide polyether group, polypropylene oxide polyether group, polybutylene oxide polyether group, or a corresponding mixed polyether group having an average molecular weight of from 300 to 5,000,
m represents an integer from 1 to 20,
n represents a number from 1 to 4, and
x x denotes a number from 1 to 8,
the polysulfide polyether silane (I) being used in quantities of from 0.1 to 15 wt.%, based on the quantity of the rubber used in each case.

2. The use of the rubber mixtures according to claim 1 for the preparation of rubber vulcanisates.

## Revendications

1. Compositions de caoutchoucs contenant au moins un caoutchouc, une matière de charge, le cas échéant d'autres produits auxiliaires pour caoutchouc et au moins un polyéther-silane polysulfuré de formule
R¹R²R³Si-X¹-(-Sₓ-polyéther-)ₘ-(-Sₓ-X²-SiR¹R²R³)ₙ (I),
dans laquelle
R¹, R² et R³ ayant des significations identiques ou différentes, représentent chacun un groupe alkyle en C₁-C₁₈, alcoxy en C₁-C₁₈, phényle ou phénoxy en C₆-C₁₂, alkylaryle en C7-C18 ou alkylaryloxy, sous réserve que l'un au moins des symboles R¹ à R³ représente un groupe alcoxy, phénoxy ou alkylaryloxy,
X¹ et X² ayant des significations identiques ou différentes, représentent chacun un groupe alkyle divalent, linéaire ou ramifié ou cyclique, éventuellement insaturé, en C₁-C₁₂,
"polyéther" représente un radical bi-, tri- ou tétra-fonctionnel de polyéther-oxyde de polyéthylène, de polyéther-oxyde de polypropylène, de polyéther-oxyde de polybutylène ou d'un copolyéther correspondant, à un poids moléculaire moyen de 300 à 5 000,
m est un nombre entier allant de 1 à 20,
n est un nombre allant de 1 à 4 et
x est un nombre allant de 1 à 8,
le polyéther-silane polysulfuré (I) étant mis en oeuvre en quantité de 0,1 à 15 % du poids du caoutchouc particulier.

2. Utilisation des compositions de caoutchoucs selon la revendication 1 pour la fabrication de vulcanisats de caoutchouc.
